# FASCICULE DE BREVET EUROPEEN

(11) **EP 3 969 786 B1**
(45) Date de publication et mention de la délivrance du brevet: **09.04.2025**
(21) Numéro de dépôt: 20724874.1
(22) Date de dépôt: 15.05.2020
(51) Int. Cl.: F16H 55/17, F02C 7/36, B33Y 80/00, F16H 55/14

(54) **PIGNON D'ARBRE DE TURBOMACHINE À VOILE COMPORTANT UNE STRUCTURE RÉTICULÉE**
RITZEL EINER TURBINENMOTORWELLE MIT EINER BAHN MIT VERNETZTER STRUKTUR
PINION OF A TURBINE ENGINE SHAFT HAVING A WEB COMPRISING A CROSS-LINKED STRUCTURE

(30) Priorité: 15.05.2019 FR 1905089
(43) Date de publication de la demande: 23.03.2022
(73) Titulaire: Safran Helicopter Engines, 64510 Bordes (FR)
(72) Inventeur: LANQUETIN, Rémi, Joseph, 77550 MOISSY-CRAMAYEL (FR); NIFENECKER, Arnaud, Georges, 77550 MOISSY-CRAMAYEL (FR); LAHITTETE, Antoine, 64000 PAU (FR)
(74) Mandataire: Regimbeau
(86) Numéro de dépôt international: PCT/EP2020/063641
(87) Numéro de publication internationale: WO 2020/229668

(56) Documents cités:
- EP-B1- 2 753 851
- US-A- 1 725 124
- US-A1- 2016 175 932

## Description

### DOMAINE DE L'INVENTION

L'invention s'inscrit dans le domaine des dispositifs de transmission de puissance à trains d'engrenages pour une turbomachine d'aéronef.

L'invention concerne en particulier un pignon pour un arbre de transmission d'une turbomachine d'aéronef ainsi qu'une boîte de réduction comprenant un tel pignon, une turbomachine comprenant un tel pignon et un procédé de fabrication d'un tel pignon.

### ETAT DE LA TECHNIQUE

La puissance mécanique générée par la rotation des éléments mobiles d'une turbomachine d'aéronef est classiquement transmise à d'autres organes de l'aéronef par des dispositifs de transmission à engrenages.

A titre d'exemple, un turbomoteur d'hélicoptère comprend de manière connue une boîte de réduction réalisant la transmission entre l'arbre relié à la turbine libre et l'arbre de sortie. La boîte de réduction comprend un train d'engrenages de réduction et un train d'entraînement des accessoires. A partir du mouvement de rotation de la turbine libre, le train d'engrenages de réduction communique un mouvement de rotation de vitesse réduite à la boîte de transmission principale pour entraîner des rotors de l'hélicoptère. Le train d'entraînement des accessoires transmet le mouvement de rotation aux différents accessoires nécessaires au fonctionnement du turbomoteur : organes de lubrification, pompes à carburant, organes d'alimentation électrique...

Les différentes chaînes de transmission des efforts mécaniques dans la boîte de réduction comprennent des engrenages à pignons réalisant des étapes de transmission avec un rapport de réduction prédéterminé.

Un pignon comprend de manière classique un moyeu s'étendant le long d'un axe avec un espace cylindrique creux destiné à recevoir un arbre de la turbomachine, ainsi qu'une denture sur une jante positionnée tout autour du moyeu. Dans les pignons connus, la jante est reliée au moyeu par un voile simple. Le voile simple peut être assimilé à un disque plein d'épaisseur plus réduite que l'épaisseur maximale de la jante. Le disque est perforé en son centre au niveau du moyeu, pour laisser passer un arbre coopérant avec le pignon.

Dans les applications aéronautiques, on cherche à réduire la masse des pièces des turbomachines afin de limiter la consommation totale de carburant et d'optimiser la fiabilité des pièces. La réduction de la masse d'une pièce de turbomachine (en ôtant de la matière dans certaines zones) ne doit pas se faire au détriment de ses performances mécaniques, et il convient d'optimiser les propriétés de chaque zone de la pièce en fonction des sollicitations mécaniques prévues pour cette zone.

S'agissant notamment des pignons de dispositifs de transmission, il convient d'être attentif au maintien de la jante en déformation sous charge et au comportement modal du pignon au cours du fonctionnement de la turbomachine. Dans le cas où la jante du pignon comprend des porte-à-faux latéraux de part et d'autre du voile, ces porte-à-faux peuvent subir des vibrations importantes en cours de fonctionnement et être fragilisés. En outre, une solution pouvant être adoptée pour limiter les vibrations est détaillée dans l'enseignement du document EP 2 753 851 B1.

Le niveau de performance mécanique des pignons d'arbres de turbomachines peut donc être amélioré.

Par ailleurs, pour réduire la masse du pignon, il a été proposé d'ajourer le voile plein du pignon en pratiquant une pluralité de perforations traversantes. Toutefois, l'ajourage du voile peut réduire les performances du pignon en augmentant les pertes par brassage, et la réduction de masse ainsi permise est encore insuffisante.

### EXPOSE DE L'INVENTION

Il existe ainsi un besoin pour un pignon d'arbre de turbomachine présentant une masse moindre afin de limiter la masse embarquée de la turbomachine, tout en présentant des propriétés mécaniques optimisées. On cherche à répartir les efforts sur le voile du pignon de sorte à éviter des contraintes mécaniques localement trop importantes, en cours de fonctionnement du dispositif de transmission incorporant le pignon.

Notamment, les déformations sous charge du voile et de la jante doivent être limitées. On souhaite également limiter les vibrations au niveau des faces latérales du voile.

A titre additionnel, on recherche un procédé de fabrication permettant d'obtenir un pignon d'arbre de turbomachine de masse réduite. Le procédé recherché doit permettre un contrôle précis de la structure mécanique du pignon pour optimiser les propriétés mécaniques de chaque zone de la pièce en fonction des niveaux de contraintes attendus.

Pour répondre à ces besoins, un premier objet de l'invention est un pignon pour un train d'engrenages de turbomachine d'aéronef selon la revendication 1.

Le pignon de l'invention comprend ainsi un voile dont le volume interne est partiellement occupé par une structure réticulée dont la masse volumique est inférieure à celles des parois avant et arrière délimitant axialement le voile. Un gain de masse est ainsi réalisé et la masse embarquée d'une turbomachine comprenant le pignon est réduite. On notera que la réduction de masse ainsi permise ne nécessite pas d'ajourer le voile.

Par ailleurs, les techniques actuelles de fabrication de structures exemple de type treillis ou « lattice » selon la terminologie anglosaxonne courante (notamment la fabrication additive), permettent de conférer à la structure réticulée les propriétés mécaniques nécessaires au maintien en charge du pignon. La raideur apportée au voile par la structure réticulée permet d'envisager une réduction d'épaisseur des surfaces latérales du voile, voire une réduction d'épaisseur des porte-à-faux de la jante.

Ainsi, le pignon de l'invention allie gain de masse et propriétés mécaniques optimisées.

D'autres caractéristiques additionnelles et non limitatives du pignon de l'invention sont les suivantes, prises seules ou en l'une quelconque des combinaisons techniquement possibles :
- la structure réticulée s'étend radialement jusqu'à une interface entre la structure réticulée et la jante.
- la structure réticulée présente une symétrie de révolution autour de l'axe du corps cylindrique.
- la paroi avant et/ou la paroi arrière s'étendent radialement depuis le corps cylindrique jusqu'à la jante.
- la jante comprend un porte-à-faux s'étendant axialement au-delà de la paroi avant ou au-delà de la paroi arrière.
- dans ce dernier cas, une largeur axiale moyenne du porte-à-faux est inférieure à 80 % d'une largeur axiale moyenne de la jante.
- la distance radiale entre la structure réticulée et le corps cylindrique, en toute position axiale le long de l'axe, est supérieure à un écart radial minimal non nul.
- la paroi avant et la paroi arrière réalisent une continuité de matière avec le corps cylindrique et avec la jante, les parois avant et arrière rejoignant la jante au niveau de l'interface.
- la maille de la structure réticulée est de géométrie hexagonale diamant.
- une densité volumique de matière de la maille de la structure réticulée est inférieure ou égale à 5 %.

Un deuxième objet de l'invention est une boîte de réduction pour une turbomachine d'aéronef, la boîte de réduction comprenant un train d'engrenages de réduction configuré pour coupler en rotation un arbre de turbine d'une turbomachine et un arbre de sortie de ladite turbomachine, le train d'engrenages de réduction comprenant un pignon comme défini ci-avant.

Un troisième objet de l'invention est une turbomachine d'aéronef, de préférence un turbomoteur d'hélicoptère, la turbomachine comprenant au moins un arbre et comprenant un pignon tel que défini ci-avant, l'arbre étant couplé en rotation avec le pignon. Un quatrième objet de l'invention est un aéronef comprenant une telle turbomachine.

Un cinquième objet de l'invention est un procédé de fabrication d'un pignon selon le premier objet de l'invention pour un train d'engrenages de turbomachine d'aéronef selon la revendication 13.

Le procédé de fabrication de l'invention présente, de manière optionnelle et non limitative, les caractéristiques suivantes prises seules ou en combinaison :
- les parois avant et arrière du voile sont obtenues par fusion laser sélective sur lit de poudre.
- le procédé comprend une étape d'obtention de la structure réticulée, ladite étape comprenant la répétition de la maille élémentaire selon les trois axes pour obtenir une matrice déformable et comprenant en outre une déformation de la matrice déformable, de préférence par étirage, pour conférer à la matrice déformable une forme prédéterminée.
- lors de l'étape de positionnement, un contact entre la paroi avant et la structure réticulée est réalisé selon une première inclinaison par rapport à un plan perpendiculaire à l'axe du corps cylindrique, la première inclinaison étant de préférence supérieure à 20 degrés, et lors de l'étape d'obtention de la paroi arrière, un contact entre la paroi arrière et la structure réticulée est réalisé selon une deuxième inclinaison par rapport audit plan, la deuxième inclinaison étant strictement inférieure à la première inclinaison, la structure réticulée servant de support pour l'obtention de la paroi arrière.

### DESCRIPTION DES FIGURES

D'autres caractéristiques, buts et avantages de l'invention ressortiront de la description qui suit, qui est purement illustrative et non limitative, et qui doit être lue en regard des figures annexées parmi lesquelles :
La **Figure 1** est une vue schématique en coupe longitudinale d'un turbomoteur d'hélicoptère ;
La **Figure 2a** est une vue schématique d'un pignon intermédiaire du turbomoteur de la Figure 1 selon un mode de réalisation de l'invention, vu en coupe longitudinale selon un axe du moyeu du pignon ;
La **Figure 2b** représente le pignon de la Figure 2a vu de côté depuis sa partie arrière ;
La **Figure 3** représente un exemple de maille tridimensionnelle pour la structure réticulée à l'intérieur du pignon ;
La **Figure 4** représente les étapes d'un procédé de fabrication de pignon selon un mode de réalisation de l'invention ;
Les **Figures 5a et 5b** sont des cartographies des contraintes exercées sur un modèle de structure réticulée au cours d'un essai mécanique, respectivement avant et après étirement d'une face avant du modèle de structure réticulée.

### DESCRIPTION DETAILLEE DE MODES DE REALISATION

La description ci-après concerne l'exemple d'un pignon adapté pour être utilisé dans un train d'engrenages d'une boîte de réduction d'un turbomoteur d'hélicoptère. On comprendra que le pignon de l'invention peut être utilisé, avec les mêmes avantages, pour tout engrenage destiné à coopérer avec un arbre d'une turbomachine.

Dans toute la suite, des éléments similaires représentés sur les figures annexées sont désignés avec les mêmes références alphanumériques.

### Architecture du turbomoteur

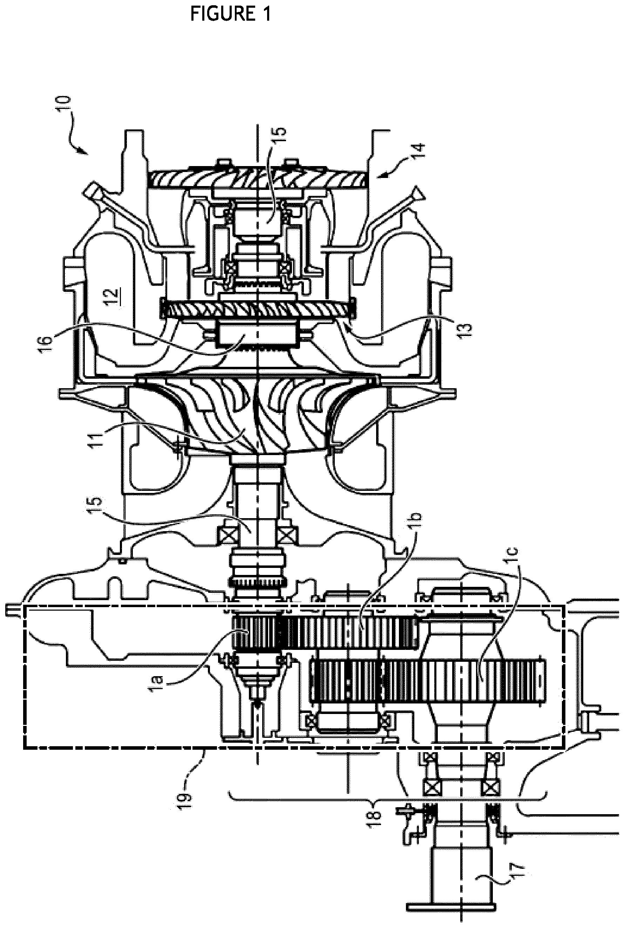

On a représenté en **Figure 1** un turbomoteur 10 d'hélicoptère. Des rotors (non représentés) de l'hélicoptère sont entraînés par la turbine libre 14 par l'intermédiaire d'une boîte de réduction repérée schématiquement par la référence 19 sur la Figure 1. Le turbomoteur 10 comprend un compresseur 11, une chambre de combustion 12, une turbine liée 13 et une turbine libre 14. La turbine liée 13 est liée au compresseur 11 par un arbre 20. La turbine libre 14 est fixée à un arbre 15 de turbine. De manière connue, les turbines transforment l'énergie libérée par les gaz d'échappement en énergie mécanique pour les rotors de l'hélicoptère.

L'arbre 15 constitue un arbre d'entrée pour la boîte de réduction 19. Cette dernière présente en outre un arbre de sortie 17. La transmission mécanique entre l'arbre d'entrée 15 et l'arbre de sortie 17 est assurée à l'intérieur de la boîte de réduction 19 par un train d'engrenages de réduction 18. Le train d'engrenages de réduction communique un mouvement de rotation, de vitesse réduite proportionnelle au régime N2 du turbomoteur, à une boîte de transmission principale par l'intermédiaire de l'arbre 17. La boîte de réduction comprend en outre un train d'entraînement des accessoires (non représenté sur la Figure 1) qui transmet un mouvement de rotation, à une vitesse proportionnelle au régime N1, aux différents accessoires nécessaires au fonctionnement du turbomoteur : organes de lubrification, pompes à carburant, organes d'alimentation électrique...

Le train d'engrenages de réduction 18 comprend un pignon d'entraînement 1a, des premier et deuxième pignons intermédiaires 1b et un pignon de sortie 1c. Les quatre dits pignons sont ici des roues d'engrenages hélicoïdaux.

Le pignon d'entraînement 1a est lié à l'arbre d'entrée 15 et engrène avec le premier des pignons intermédiaires 1b. Le deuxième des pignons intermédiaires 1b engrène avec le pignon de sortie 1c qui est lié à l'arbre de sortie 17. Le train d'engrenages de réduction réalise un rapport de réduction prédéterminé. A titre d'exemple, au cours du fonctionnement du turbomoteur 10, la vitesse de rotation du pignon d'entraînement 1a est de 42014 rotations par minute et la vitesse de rotation du pignon de sortie 1c est de 5610 rotations par minute.

### Structure du pignon

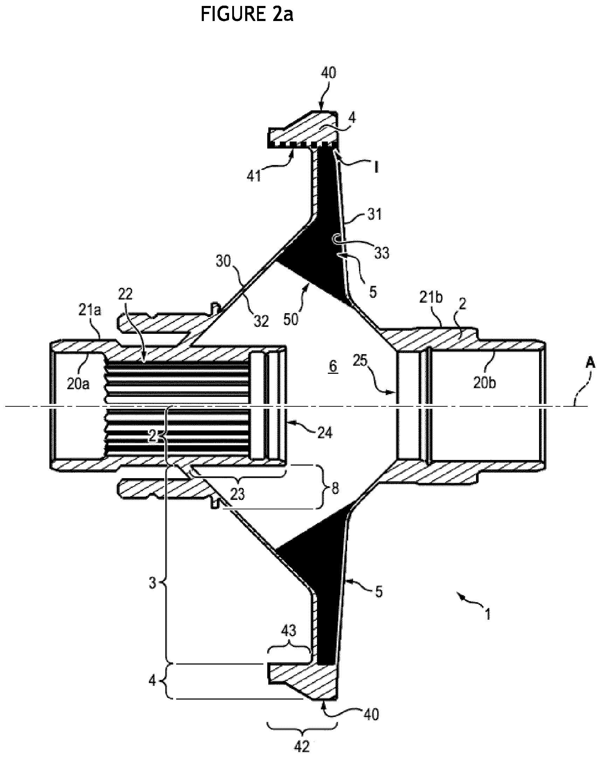

On a représenté en coupe longitudinale en **Figure 2a** un exemple de pignon 1 conforme à l'invention. Le pignon 1 est adapté pour être utilisé dans un train d'engrenages de réduction d'une boîte de réduction de turbomoteur, par exemple comme pignon d'entraînement, comme pignon intermédiaire ou comme pignon de sortie. Le pignon comporte un moyeu 2 de forme générale cylindrique, configuré pour rentrer en prise avec un arbre de turbomachine s'étendant le long de l'axe A. Le moyeu 2 supporte un voile 3 et une jante 4 concentrique avec le moyeu 2. Par « concentrique » on entend qu'une face interne de la jante 4 est centrée sur le même axe A que le moyeu 2. La jante 4 comporte une denture 40 configurée pour rentrer en prise avec une autre denture d'un autre engrenage. Par exemple, si le pignon est un pignon d'entrée 1a, la denture 40 est configurée pour rentrer en prise avec une denture d'un pignon intermédiaire 1b situé en regard. De préférence, il existe une continuité de matière entre le moyeu 2, le voile 3 et la jante 4.

Dans toute la suite, la direction radiale est repérée par rapport à l'axe A.

Le moyeu 2 comporte une partie avant et une partie arrière. Sur la Figure 2a, la partie avant se trouve à gauche et la partie arrière se trouve à droite.

La partie avant du moyeu comporte une paroi interne 20a et une paroi externe 21a et débouche dans un espace creux 6 du pignon par une ouverture 24 circulaire. La partie arrière du moyeu comporte une paroi interne 20b et une paroi externe 21b et débouche dans ce même espace creux 6 par une ouverture 25 circulaire. Une portion de la paroi interne 20a de la partie avant du moyeu comprend des cannelures 22, destinées à rentrer en prise avec des éléments complémentaires d'une paroi externe d'un arbre (non représenté) reçu dans le moyeu 2, afin de solidariser en rotation le pignon et ledit arbre.

Le voile 3 s'étend radialement depuis le moyeu 2 jusqu'à la jante 4. Le voile 3 est solidaire de la partie avant du moyeu, via une paroi avant 32 présentant une surface avant 30. Le voile 3 est également solidaire de la partie arrière du moyeu, via une paroi arrière 33 présentant une surface arrière 31. Le voile 3 est en outre solidaire de la jante.

Le voile 3 est délimité axialement par la paroi avant 32 et la paroi arrière 33 et est délimité radialement par la jante 4.

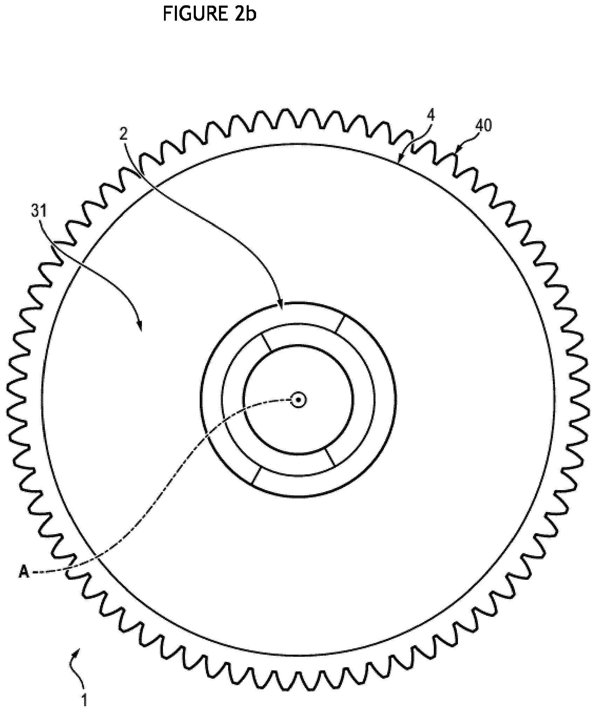

La Figure 2b illustre le même pignon vu de côté selon un axe de vision confondu avec l'axe A du moyeu 2, depuis la partie arrière du moyeu. Comme on peut le voir sur la Figure 2b, la surface arrière 31 du voile 3 du pignon ne présente pas nécessairement de perforations traversantes (de même que la face avant, qui n'est pas visible sur cette figure). En effet, la structure réticulée comprise dans le voile est de masse moindre par rapport à un voile plein qui occuperait le même espace, et il n'est pas nécessaire d'ajourer le voile.

Dans l'exemple des Figures 2a et 2b, la paroi avant 32 comprend, sur la partie basse de son extension radiale, une surface intérieure et une surface extérieure. Les deux surfaces sont parallèles et présentent chacune une inclinaison d'environ 40° par rapport à un plan orthogonal à l'axe A (à la verticale sur la figure). La partie avant du moyeu 2 fait saillie vers l'intérieur du pignon depuis la surface intérieure de la paroi avant 32. Ainsi, la paroi avant 32 du voile s'étend radialement vers l'extérieur et axialement vers l'arrière depuis la paroi externe 21a de la partie avant du moyeu, avec une forme en entonnoir.

De même, la partie basse de la paroi arrière 33 s'étend radialement vers l'extérieur et axialement vers l'avant, en entonnoir, depuis la paroi externe 21b de la partie arrière du moyeu.

Le voile 3 comprend en outre une structure réticulée 5 autour du corps cylindrique 2 entre la paroi avant 32 et la paroi arrière 33. La structure réticulée est formée pour tout ou partie (ici totalement) d'une répétition d'une même maille élémentaire. La maille élémentaire est répétée dans les trois directions de l'espace pour former la structure réticulée 5. Pour désigner une telle structure réticulée, il est courant d'utiliser la terminologie anglosaxonne de « lattice ».

Une masse volumique de la maille élémentaire de la structure réticulée est strictement inférieure à chacune des masses volumiques des parois avant et arrière. Ainsi, la masse de la structure réticulée 5 est inférieure à une masse de la matière dans la continuité des parois avant et arrière qui occuperait le même volume que la structure réticulée au sein du voile. La structure réticulée 5 remplit ainsi l'espace entre la paroi avant 32 et la paroi arrière 33 en permettant une réduction de la masse totale du pignon.

La structure du voile 3 de l'exemple de la Figure 2a est détaillée ci-après.

La jante 4 présente, dans l'exemple de la Figure 2a, un porte-à-faux 41 vers l'avant. Le porte-à-faux 41 s'étend axialement au-delà de la paroi avant 32 et fait saillie à partir de la surface avant 30 du voile.

De nombreuses configurations sont possibles concernant la position du porte-à-faux de la jante par rapport au voile.

Dans le présent exemple, le porte-à-faux 41 s'étend vers l'avant sur une largeur axiale moyenne 43 qui est inférieure à 80 % d'une largeur axiale moyenne 42 de la jante 4, de préférence inférieure à 66 % comme sur la Figure 2a.

En alternative, le pignon peut comporter un voile centré axialement par rapport à la jante. Le pignon présente alors une jante avec un porte-à-faux arrière dans les mêmes ordres de grandeur de dimensions que le porte-à-faux avant. Il est également possible de prévoir un porte-à-faux avant et un porte-à-faux arrière n'ayant pas les mêmes dimensions axiales.

De manière encore alternative, le pignon peut ne pas présenter de porte-à-faux avant et présenter uniquement un porte-à-faux arrière.

Si nécessaire, le rapport d'épaisseur d'un porte-à-faux de la jante 4 par rapport au voile peut être encore davantage réduit, par rapport aux dimensions du porte-à-faux 41 illustré sur la Figure 2a, sans porter atteinte aux propriétés mécaniques du pignon. Cette réduction de rapport d'épaisseur peut être obtenue en augmentant la largeur axiale de la structure réticulée 5. En alternative, le pignon peut ne pas présenter de porte-à-faux.

### Voile

Conformément à l'invention, le pignon comporte, dans le volume interne du voile 3, une structure réticulée 5.

Par « structure réticulée » on entend une structure mécanique obtenue par de multiples répétitions dans l'espace d'une maille tridimensionnelle élémentaire. La maille est ici répétée selon trois directions orthogonales deux à deux de l'espace. La structure réticulée présente une masse volumique faible, le volume occupé par la maille tridimensionnelle étant en grande partie constitué de vide. La masse volumique de la structure réticulée 5 est strictement inférieure à la masse volumique de la paroi avant 32 et de la paroi arrière 33 du voile 3. A titre d'exemple, la masse volumique de la structure réticulée 5 est plus de dix fois inférieure à celles des parois 32 et 33.

La présence de la structure réticulée 5, en lieu et place du volume de matière qui remplirait l'espace axial entre les deux voiles en l'absence de la structure réticulée, permet des gains de masse très importants, sans sacrifier les performances mécaniques du pignon.

La présence de la structure réticulée peut permettre une diminution de plus de 15%, voire jusqu'à 20%, de la masse du pignon. Dans le présent exemple, pour un pignon dont la masse est initialement de 3,1 kilogrammes si un voile plein remplace la structure réticulée, un gain de masse de 600 grammes est réalisé et la masse du pignon comportant la structure réticulée est réduite à 2,5 kilogrammes.

La présence de la structure réticulée 5 permet notamment de diminuer les épaisseurs des parois avant 32 et arrière 33, par rapport au cas où un espace creux occuperait le volume de la structure réticulée. Les épaisseurs maximales des parois avant et arrière sont de préférence inférieures à 50% de l'épaisseur minimale de la structure réticulée selon l'axe A, et encore plus préférentiellement inférieures à 25% de cette dernière épaisseur comme illustré sur la Figure 2a. Cela participe à la réduction de masse totale du pignon.

La réduction d'épaisseur des parois avant et arrière 32 et 33 n'est pas réalisée au détriment des propriétés mécaniques du voile. La raideur mécanique apportée par la structure réticulée 5 permet en effet de diminuer la résonance maximale des parois avant et arrière du voile 3, sous charge du pignon.

En l'absence de la structure réticulée, la jante 4 pourrait être sujette à une déformation sous charge trop importante. La raideur apportée par la structure réticulée 5 permet de réduire fortement cette déformation. Un niveau acceptable de déformation sous charge de la jante est fonction du type de denture destiné à être utilisé en regard de la jante. Ici, on vise une déformation sous charge de la jante inférieure à 50 micromètres.

La tenue mécanique conférée par la structure réticulée 5 permet de redistribuer les efforts mécaniques dans le voile et de réduire les contraintes maximales, ce qui rallonge la fiabilité et la durée de vie du pignon. On vise des contraintes maximales inférieures à la capacité en fatigue du matériau constitutif des parois avant et arrière du voile.

Dans cet exemple, la structure réticulée 5 présente une symétrie de révolution autour de l'axe A du moyeu 2, ce qui facilite la fabrication du pignon.

Dans cet exemple, la structure réticulée 5 s'étend avantageusement jusqu'à la jante 4 dans la direction radiale. Une partie radiale externe de la structure réticulée 5 est en contact avec la jante 4 au niveau d'une interface I représentée en trait pointillé sur la Figure 2a. Ainsi, la structure réticulée supporte radialement la jante.

En alternative, un espace radial peut être ménagé entre une partie radiale externe de la structure réticulée et le côté interne de la jante 4.

Dans l'exemple de la Figure 2a, la structure réticulée 5 n'est pas en contact radial avec la partie avant du moyeu 2, ni avec la partie arrière du moyeu 2. Tout au long de l'axe A, la distance radiale entre une paroi radiale interne 50 de la structure réticulée 5 et le moyeu 2 est supérieure à un écart radial minimal 8 non nul. De préférence, l'écart radial minimal 8 est supérieur ou égal à 10% de l'extension radiale totale de la structure réticulée, de préférence supérieur ou égal à 20%.

Un avantage de cette configuration est d'accroître la réduction de masse totale du pignon. Un écart radial minimal de 20% de l'extension radiale de la structure réticulée réalise un compromis satisfaisant entre la diminution de masse et la conservation de la raideur du voile. Contrairement aux structures de pignon fréquemment observées dans les turbomachines, on diminue ainsi la masse totale du pignon sans qu'il ne soit nécessaire d'ajourer le voile du pignon. On évite ainsi des pertes supplémentaires par brassage.

### Structure réticulée

De manière avantageuse, la structure réticulée 5 est constituée à au moins 90%, de préférence à 100%, d'une maille tridimensionnelle M de type hexagonal diamant répétée dans l'espace selon les trois directions de l'espace. La structure réticulée comprend ainsi un treillis tridimensionnel formé par la répétition de la maille hexagonale diamant.

En alternative, la structure réticulée peut être formée, pour tout ou partie, de la répétition d'une maille tridimensionnelle de type cubique centrée.

Un matériau de la structure réticulée est de préférence un matériau métallique, comme l'acier. En alternative, la structure réticulée peut être formée en polymère.

La structure réticulée peut notamment être obtenue par fabrication additive, notamment par fusion sélective laser ou « Selective Laser Melting » (SLM). La structure réticulée est alors obtenue par fusion d'une poudre métallique. Un avantage de cette dernière technique de fabrication est sa fiabilité et sa rapidité d'exécution.

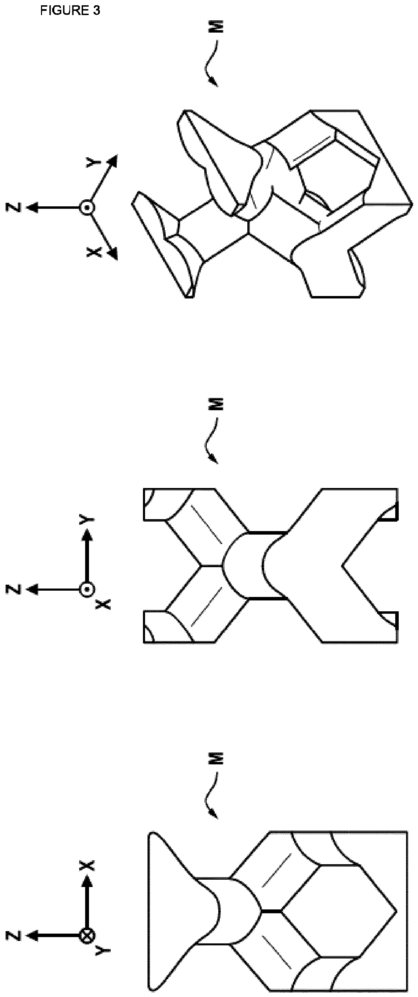

La maille hexagonale diamant M est représentée en **Figure 3****.** La Figure 3 donne à voir la maille M selon trois vues en perspective, sous trois angles de vue différents dans le même repère tridimensionnel (X, Y, Z).

La densité volumique de matière de la maille hexagonale diamant est avantageusement inférieure à 10% de sorte à limiter la masse globale de la structure réticulée et permettre un gain important de masse embarquée de la turbomachine comprenant le pignon. Cette densité volumique de matière doit toutefois demeurer suffisamment importante pour garantir la bonne tenue mécanique de la structure réticulée. La densité volumique de matière de la maille est ici de 1/20ème, soit 5%. Autrement dit, le rapport entre le volume occupé par du vide et le volume total occupé par la structure réticulée est de 95%. Toutefois, la densité volumique de matière de la structure réticulée peut être modulée afin de minimiser les contraintes exercées, sous charge du pignon, sur la structure réticulée.

On notera que, si la structure réticulée selon l'exemple représenté en Figures 2a, 2b et 3 est constituée intégralement de la répétition d'une maille hexagonale diamant telle que représentée en Figure 3, plusieurs géométries de maille tridimensionnelle peuvent être intégrées dans une seule structure réticulée. La structure réticulée comprend alors plusieurs zones constituées chacune d'une répétition d'une maille tridimensionnelle.

### Procédé de fabrication du pignon

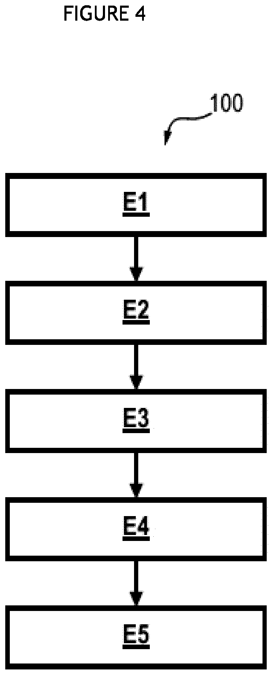

On a représenté en **Figure 4** les étapes d'un procédé 100 de fabrication de pignon selon un exemple de réalisation de l'invention. Le procédé 100 permet par exemple d'obtenir un pignon d'un train d'engrenages de réduction d'une turbomachine tel que le pignon représenté en Figure 2a. Dans la suite, on prendra l'exemple du pignon de la Figure 2a.

A une étape E1 optionnelle, la structure réticulée 5 est fabriquée et adaptée à la forme voulue pour les parois avant et arrière du pignon. De manière très avantageuse, la structure réticulée 5 est obtenue par fabrication additive. La fabrication additive constitue une solution rapide et très flexible pour obtenir la structure réticulée 5 à un coût modéré. Une très large variété de géométries de structures réticulées peut être obtenue par fabrication additive, aussi bien en termes de forme et de densité volumique de matière de la maille que de forme des parois de la structure réticulée.

Par exemple, une matrice déformable est fabriquée par fabrication additive et est ensuite mise en forme pour obtenir la structure réticulée 5. La matrice initialement obtenue peut être de forme parallélépipédique. Pour adapter la structure réticulée à la forme voulue pour le pignon, il convient de donner à la structure une forme globalement cylindrique. Cette forme peut être obtenue en étirant et/ou en découpant la matrice.

Un avantage de la mise en forme par étirage est d'éviter que les mailles situées au bord de la structure réticulée ne soient ouvertes. Par « maille ouverte » on entend une maille dont un ou plusieurs bords interrompent le motif. En effet, des mailles ouvertes présentent une tenue mécanique moindre par rapport à des mailles non ouvertes.

Il convient aussi de percer la structure réticulée 5 en son axe central, pour pouvoir disposer la structure réticulée autour du moyeu.

De façon optionnelle et avantageuse, les bords de la structure réticulée 5 sont étirés avant de réaliser la paroi avant 32 contre la structure réticulée. Il a été constaté que les bords d'une structure réticulée non étirée, et notamment les coins, peuvent subir localement des contraintes mécaniques bien plus importantes que les autres zones de la structure. Ce phénomène est connu sous le nom « effet KT ». La Demanderesse a observé qu'un étirage des bords permet de diminuer localement le niveau maximal de contraintes mécaniques subies au niveau des bords.

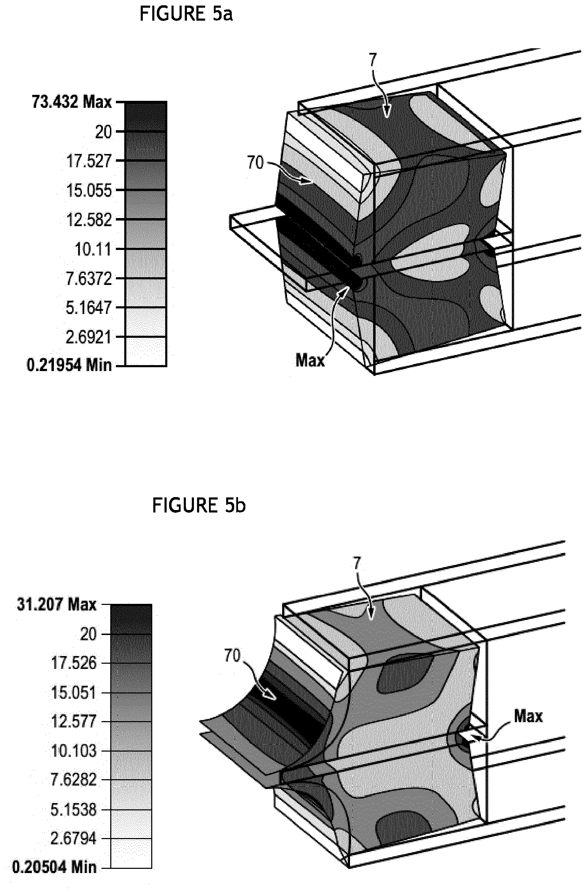

A titre illustratif, on a représenté en **Figure 5a** une carte tridimensionnelle des contraintes au sein d'une structure réticulée témoin 7, obtenue par répétition d'une maille hexagonale diamant, subissant une charge sur ses faces inférieure et supérieure au cours d'un essai mécanique.

On a représenté en **Figure 5b** une carte tridimensionnelle des contraintes au sein de la même structure témoin 7 après étirage d'une face avant 70 de la structure témoin.

Avant étirage, la contrainte mécanique maximale subie par la structure témoin 7 au cours de l'essai est de 73,432 Pascal et est observée sur la face avant 70.

Après étirage de la face avant 70 vers l'avant comme illustré sur la Figure 5b, les contraintes mécaniques subies par la face avant 70 sont redistribuées et réduites. Le point de contrainte maximale n'est plus observé sur la face avant 70 mais à l'arrière de la structure. Les contraintes sur la face avant 70 sont inférieures à 31,207 Pascal.

Ainsi, en étirant la structure réticulée 5 du pignon, on peut réduire le niveau de contraintes maximales subi par la structure réticulée en charge, et augmenter la durée de vie et la fiabilité du pignon. Par exemple, le bord inférieur de la face avant (gauche sur la Figure 2a) de la structure réticulée 5 est étiré vers l'avant, pour conférer à la structure réticulée 5 la forme trapézoïdale visible en Figure 2a.

De retour à la Figure 4, le procédé 100 comprend ensuite une étape E2 d'obtention d'un corps cylindrique du pignon, ici du moyeu 2. Le moyeu est préférentiellement obtenu par fabrication additive. En alternative, le moyeu est fabriqué par tout moyen connu de l'homme du métier.

A une étape E3, on obtient la paroi avant 32 et la jante 4 fixées au moyeu 2. De préférence, la paroi avant 32 et la jante 4 sont obtenues dans la continuité de la partie avant du moyeu 2.

De façon avantageuse, la denture 40 de la jante 4 peut être ébauchée par fabrication additive au cours de l'étape E3 ou ultérieurement au cours du procédé 100. Ainsi, il est possible de se passer d'une étape ultérieure d'ébauche de la denture par taillage, ce qui réduit les coûts de fabrication du pignon.

A une étape E4, on positionne, contre la paroi avant 32 précédemment obtenue, la structure réticulée 5. Dans le présent exemple, la structure réticulée 5 est positionnée de sorte à être en contact avec une face interne de la jante 4 (interface I de la Figure 2a).

La structure réticulée 5 a précédemment été obtenue par répétition d'une (ou éventuellement de plusieurs) maille(s) tridimensionnelle(s). La structure réticulée est fabriquée soit au cours de l'étape E1, soit directement contre la paroi avant 32, soit avant la mise en œuvre du procédé 100.

A une étape E5, on obtient la paroi arrière 33 du voile 3 contre la structure réticulée 5. La paroi arrière 33 est de préférence obtenue par fabrication additive, de préférence par fusion sélective laser sur lit de poudre. On utilise la face arrière de la structure réticulée 5 comme support pour la fabrication de la paroi arrière 33, ce qui permet de se passer d'une pièce mécanique séparée formant support.

Entre les étapes E3 et E5, on réalise ainsi un empilement de la paroi avant 32, puis de la structure réticulée 5 et enfin de la paroi arrière 33.

Les masses volumiques respectives de la paroi avant et de la paroi arrière du voile sont toutes deux strictement supérieures à la masse volumique de la maille de la structure réticulée, ou le cas échéant supérieures aux masses volumiques de chacune des mailles utilisées dans la structure réticulée.

A l'issue du procédé 100, on obtient un pignon qui incorpore la structure réticulée 5 au sein du volume interne du voile 3.

Le procédé 100 fournit une solution simple et rapide pour la fabrication du pignon.

De façon très avantageuse, le pignon peut être entièrement réalisé par fabrication additive, par exemple par fusion sélective laser ou SLM. L'ensemble du pignon peut alors être fabriqué en un seul tenant. Un avantage de la fusion sélective laser est la possibilité d'optimiser les propriétés mécaniques des différentes zones de la pièce, en fonction des contraintes mécaniques prévues sous charge du pignon, et de limiter la masse totale des éléments de la pièce.

Le moyeu 2, le voile 3 et la jante 4 du pignon sont avantageusement fabriqués en matériau métallique, par exemple en acier. En alternative, ces pièces peuvent être constituées pour tout ou partie d'un polymère thermoplastique, par exemple le polyétheréthercétone, désigné usuellement par le sigle PEEK.

L'obtention du pignon par fabrication additive permet, d'une manière générale, de concevoir la pièce de manière optimale en s'approchant au maximum du besoin fonctionnel, notamment en termes de comportement modal et de déformation sous charge du pignon. La fabrication additive permet d'optimiser les propriétés mécaniques de chaque zone de la pièce en fonction des niveaux de contraintes attendus.

L'optimisation des propriétés mécaniques du pignon va de pair avec un gain de masse. La structure réticulée présente une masse inférieure à celle d'un voile plein qui occuperait le même espace, puisque la masse volumique de la maille élémentaire est inférieure à celles des parois avant et arrière délimitant axialement le voile. La masse embarquée d'une turbomachine comprenant le pignon est donc réduite.

Selon une variante préférentielle du procédé, lors du positionnement E4 de la structure réticulée 5 contre la paroi avant 32, le contact entre la paroi avant et la structure réticulée est réalisé selon une première inclinaison repérée relativement à un plan orthogonal à l'axe A. La première inclinaison est supérieure à 20° par rapport audit plan. Lors de l'obtention E5 de la paroi arrière 33, le contact entre la paroi arrière et la structure réticulée est réalisé selon une deuxième inclinaison inférieure à la première inclinaison.

A titre d'exemple, sur la Figure 2a, les deux surfaces de la paroi avant 32 présentent une inclinaison d'environ 40° par rapport à un plan orthogonal à l'axe A (correspondant à une direction verticale sur la Figure 2a). Les deux surfaces de la paroi arrière 33, quant à elles, présentent une très faible inclinaison par rapport audit plan, inférieure à 5°.

Un avantage de cette variante est que la structure réticulée 5 sert de support pour la paroi arrière, lors de l'étape E5 d'obtention de la paroi arrière. Il est particulièrement avantageux d'utiliser de cette manière la structure réticulée 5 comme support lorsque la paroi avant 32 et la paroi arrière 33 sont obtenues par fabrication additive, notamment par fusion sélective laser sur lit de poudre.

Un autre avantage est que la structure réticulée, qui sert donc de support pour la fabrication des parois du voile 3, est intégrée à l'intérieur du voile du pignon final. La structure réticulée présente donc le double avantage de servir de support de fabrication et de permettre une réduction de masse totale du pignon après fabrication, tout en conservant des propriétés mécaniques optimisées pour le pignon.

On notera qu'en alternative, la paroi arrière peut présenter une inclinaison plus importante que la paroi avant par rapport à un plan orthogonal à l'axe. Il est alors possible de fabriquer la paroi arrière en premier lieu, et d'utiliser la structure réticulée comme support pour l'obtention de la paroi avant.

## Revendications

1. Pignon (1) pour un train d'engrenages de turbomachine d'aéronef, le pignon (1) comprenant :
- un corps cylindrique (2) s'étendant le long d'un axe (A) et configuré pour rentrer en prise avec un arbre reçu dans le corps cylindrique,
- une jante (4) concentrique avec le corps cylindrique (2),
- un voile (3) délimité axialement par une paroi avant (32) et une paroi arrière (33) et s'étendant radialement depuis le corps cylindrique (2) jusqu'à la jante (4), chacune des parois avant et arrière présentant une masse volumique, le voile comprenant une structure réticulée (5) autour du corps cylindrique (2) entre la paroi avant (32) et la paroi arrière (33),
le pignon (1) étant **caractérisé en ce que** la structure réticulée comprend une maille (M) élémentaire répétée selon trois axes d'un repère tridimensionnel formant une structure en treillis, une masse volumique de la maille élémentaire étant strictement inférieure à chacune des masses volumiques des parois avant et arrière.

2. Pignon (1) selon la revendication 1, dans lequel la structure réticulée (5) s'étend radialement jusqu'à une interface (I) entre la structure réticulée et la jante (4).

3. Pignon (1) selon l'une quelconque des revendications 1 ou 2, dans lequel la structure réticulée (5) présente une symétrie de révolution autour de l'axe (A) du corps cylindrique.

4. Pignon (1) selon l'une quelconque des revendications 1 à 3, dans lequel la paroi avant (32) et/ou la paroi arrière (33) s'étendent radialement depuis le corps cylindrique (2) jusqu'à la jante (4).

5. Pignon (1) selon l'une quelconque des revendications 1 à 4, dans lequel la jante (4) comprend un porte-à-faux (41) s'étendant axialement au-delà de la paroi avant (32) ou au-delà de la paroi arrière (33), une largeur axiale moyenne (43) du porte-à-faux (41) étant de préférence inférieure à 80 % d'une largeur axiale moyenne (42) de la jante (4).

6. Pignon (1) selon l'une quelconque des revendications 1 à 5, dans lequel la distance radiale entre la structure réticulée (5) et le corps cylindrique (2), en toute position axiale le long de l'axe (A), est supérieure à un écart radial minimal (8) non nul.

7. Pignon (1) selon l'une quelconque des revendications 1 à 6, dans lequel la paroi avant et la paroi arrière réalisent une continuité de matière avec le corps cylindrique (2) et avec la jante (4), les parois avant et arrière rejoignant la jante au niveau de l'interface (I).

8. Pignon (1) selon l'une quelconque des revendications 1 à 7, dans lequel la maille (M) de la structure réticulée (5) est de géométrie hexagonale diamant.

9. Pignon (1) selon l'une quelconque des revendications 1 à 8, dans lequel une densité volumique de matière de la maille (M) de la structure réticulée (5) est inférieure ou égale à 5 %.

10. Boîte de réduction pour une turbomachine d'aéronef, la boîte de réduction comprenant un train d'engrenages de réduction (18) configuré pour coupler en rotation un arbre de turbine (15) d'une turbomachine et un arbre de sortie (17) de la turbomachine, le train d'engrenages de réduction comprenant un pignon (1) selon l'une quelconque des revendications 1 à 9.

11. Turbomachine d'aéronef, de préférence un turbomoteur (10) d'hélicoptère, la turbomachine comprenant au moins un arbre et comprenant un pignon (1) selon l'une quelconque des revendications 1 à 9, l'arbre étant couplé en rotation avec le pignon (1).

12. Aéronef comprenant une turbomachine selon la revendication 11.

13. Procédé de fabrication d'un pignon (1) pour un train d'engrenages de turbomachine d'aéronef, le procédé comprenant des étapes successives de :
- obtention (E2) d'un corps cylindrique du pignon (1) ;
- obtention (E3) d'une paroi avant d'un voile (3) du pignon (1) et obtention d'une jante réalisant une continuité de matière avec la paroi avant, la paroi avant présentant une masse volumique ;
- positionnement (E4), contre la paroi avant, d'une structure réticulée (5) ayant été obtenue par répétition d'une maille (M) élémentaire selon trois axes d'un repère tridimensionnel formant une structure en treillis, une masse volumique de la maille élémentaire étant strictement inférieure à la masse volumique de la paroi avant,
- obtention (E5) d'une paroi arrière du voile du pignon (1), contre la structure réticulée, un matériau de la paroi arrière étant choisi avec une masse volumique de la paroi arrière strictement supérieure à la masse volumique de la structure réticulée,
le corps cylindrique, les parois avant et arrière du voile (3) et la jante (4) étant obtenus d'un seul tenant par fabrication additive, le voile (3) ainsi obtenu incorporant la structure réticulée (5), le pignon (1) obtenu étant selon l'une quelconque des revendications 1 à 9.

14. Procédé de fabrication selon la revendication 13, dans lequel la paroi avant et/ou la paroi arrière du voile (3) est obtenue par fusion laser sélective sur lit de poudre.

15. Procédé de fabrication selon l'une quelconque des revendications 13 ou 14, comprenant une étape (E1) d'obtention de la structure réticulée (5), ladite étape comprenant la répétition de la maille (M) élémentaire selon les trois axes pour obtenir une matrice déformable et comprenant en outre une déformation de la matrice déformable, de préférence par étirage, pour conférer à la matrice déformable une forme prédéterminée.

16. Procédé de fabrication selon l'une quelconque des revendications 13 à 15, dans lequel :
- lors de l'étape de positionnement (E4), un contact entre la paroi avant et la structure réticulée (5) est réalisé selon une première inclinaison par rapport à un plan perpendiculaire à l'axe (A) du corps cylindrique, la première inclinaison étant de préférence supérieure à 20 degrés,
- lors de l'étape d'obtention (E5) de la paroi arrière, un contact entre la paroi arrière et la structure réticulée (5) est réalisé selon une deuxième inclinaison par rapport audit plan, la deuxième inclinaison étant strictement inférieure à la première inclinaison, la structure réticulée (5) servant de support pour l'obtention de la paroi arrière.

## Patentansprüche

1. Ritzel (1) für eine Turbomaschinen-Getriebebaugruppe eines Luftfahrzeugs, wobei das Ritzel (1) umfasst:
- einen zylindrischen Körper (2), der sich entlang einer Achse (A) erstreckt und ausgelegt ist, um mit einer in dem zylindrischen Körper aufgenommenen Welle in Eingriff zu kommen,
- einen Rand (4), der zu dem zylindrischen Körper (2) konzentrisch ist,
- eine Scheibe (3), die axial von einer vorderen Wand (32) und einer hinteren Wand (33) begrenzt ist und sich radial vom zylindrischen Körper (2) bis zum Rand (4) erstreckt, wobei sowohl die vordere als auch die hintere Wand eine Dichte aufweisen, wobei die Scheibe eine netzartige Struktur (5) um den zylindrischen Körper (2) zwischen der vorderen Wand (32) und der hinteren Wand (33) umfasst,
wobei das Ritzel (1) **dadurch gekennzeichnet ist, dass** die netzartige Struktur ein elementares Mesh (M) umfasst, das sich in drei Achsen eines dreidimensionalen Bezugssystems wiederholt, das eine Gitterstruktur bildet, wobei eine Dichte des elementaren Meshs strikt kleiner ist als jede der Dichten der vorderen und hinteren Wand.

2. Ritzel (1) nach Anspruch 1, wobei sich die netzartige Struktur (5) radial bis zu einer Grenzfläche (I) zwischen der netzartigen Struktur und dem Rand (4) erstreckt.

3. Ritzel (1) nach einem der Ansprüche 1 oder 2, wobei die netzartige Struktur (5) eine Drehsymmetrie um die Achse (A) des zylindrischen Körpers aufweist.

4. Ritzel (1) nach einem der Ansprüche 1 bis 3, wobei sich die vordere Wand (32) und/oder die hintere Wand (33) radial vom zylindrischen Körper (2) bis zum Rand (4) erstrecken.

5. Ritzel (1) nach einem der Ansprüche 1 bis 4, wobei der Rand (4) einen sich axial über die vordere Wand (32) oder über die hintere Wand (33) hinaus erstreckenden Überhang (41) umfasst, wobei eine mittlere axiale Breite (43) des Überhangs (41) vorzugsweise kleiner als 80% einer mittleren axialen Breite (42) des Randes (4) ist.

6. Ritzel (1) nach einem der Ansprüche 1 bis 5, wobei der radiale Abstand zwischen der netzartigen Struktur (5) und dem zylindrischen Körper (2) in jeder axialen Position entlang der Achse (A) größer ist als ein minimaler radialer Abstand (8) ungleich null.

7. Ritzel (1) nach einem der Ansprüche 1 bis 6, wobei die vordere Wand und die hintere Wand eine Materialkontinuität mit dem zylindrischen Körper (2) und mit dem Rand (4) bilden, wobei die vordere und hintere Wand an den Rand im Bereich der Grenzfläche (I) anschließen.

8. Ritzel (1) nach einem der Ansprüche 1 bis 7, wobei das Mesh (M) der netzartigen Struktur (5) eine Sechseck-Diamantgeometrie aufweist.

9. Ritzel (1) nach einem der Ansprüche 1 bis 8, wobei eine Materialdichte des Meshs (M) der netzartigen Struktur (5) kleiner oder gleich 5% ist.

10. Untersetzungsgetriebe für eine Luftfahrzeug-Turbomaschine, wobei das Untersetzungsgetriebe eine Untersetzungs-Getriebebaugruppe (18) umfasst, die ausgelegt ist, um eine Turbinenwelle (15) einer Turbomaschine und eine Ausgangswelle (17) der Turbomaschine rotatorisch zu koppeln, wobei die Getriebebaugruppe ein Ritzel (1) nach einem der Ansprüche 1 bis 9 umfasst.

11. Luftfahrzeug-Turbomaschine, vorzugsweise ein Turbomotor (10) für Hubschrauber, wobei die Turbomaschine mindestens eine Welle umfasst und ein Ritzel (1) nach einem der Ansprüche 1 bis 9 umfasst, wobei die Welle mit dem Ritzel (1) rotatorisch gekoppelt ist.

12. Luftfahrzeug, umfassend eine Turbomaschine nach Anspruch 11.

13. Verfahren zur Herstellung eines Ritzels (1) für eine Getriebebaugruppe einer Luftfahrzeug-Turbomaschine, wobei das Verfahren folgende aufeinanderfolgende Schritte umfasst:
- Erhalten (E2) eines zylindrischen Körpers des Ritzels (1);
- Erhalten (E3) einer vorderen Wand einer Scheibe (3) des Ritzels (1) und Erhalten eines Rands, der eine Materialkontinuität mit der vorderen Wand herstellt, wobei die vordere Wand eine Dichte aufweist;
- Positionieren (E4) einer netzartigen Struktur (5) an der vorderen Wand, die durch Wiederholung eines elementaren Meshs (M) in drei Achsen eines dreidimensionalen Bezugssystems erhalten wurde, das eine Gitterstruktur bildet, wobei eine Dichte des elementaren Meshs strikt kleiner ist als die Dichte der vorderen Wand,
- Erhalten (E5) einer hinteren Wand des Randes des Ritzels (1) an der netzartigen Struktur, wobei ein Material der hinteren Wand mit einer Dichte der hinteren Wand gewählt wird, die strikt größer ist als die Dichte der netzartigen Struktur,
wobei der zylindrische Körper, die vordere und hintere Wand der Scheibe (3) und der Rand (4) in einem Stück durch additive Fertigung erhalten werden, wobei die derart erhaltene Scheibe (3) die netzartige Struktur (5) einschließt, wobei das erhaltene Ritzel (1) nach einem der Ansprüche 1 bis 9 ist.

14. Herstellungsverfahren nach Anspruch 13, wobei die vordere Wand und/oder die hintere Wand der Scheibe (3) durch selektives Laserschmelzen auf einem Pulverbett erhalten wird.

15. Herstellungsverfahren nach einem der Ansprüche 13 oder 14, umfassend einen Schritt (E1) des Erhaltens der netzartigen Struktur (5), wobei der Schritt die Wiederholung des elementaren Meshs (M) in den drei Achsen umfasst, um eine verformbare Matrix zu erhalten, und ferner eine Verformung der verformbaren Matrix umfasst, vorzugsweise durch Ziehen, um der verformbaren Matrix eine vorgegebene Form zu verleihen.

16. Herstellungsverfahren nach einem der Ansprüche 13 bis 15, wobei:
- beim Positionierungsschritt (E4) ein Kontakt zwischen der vorderen Wand und der netzartigen Struktur (5) mit einer ersten Neigung in Bezug auf eine Ebene senkrecht zur Achse (A) des zylindrischen Körpers hergestellt wird, wobei die erste Neigung vorzugsweise größer als 20 Grad ist,
- beim Schritt des Erhaltens (E5) der hinteren Wand ein Kontakt zwischen der hinteren Wand und der netzartigen Struktur (5) mit einer zweiten Neigung in Bezug auf die Ebene hergestellt wird, wobei die zweite Neigung strikt kleiner ist als die erste Neigung, wobei die netzartige Struktur (5) als Träger für den Erhalt der hinteren Wand dient.

## Claims

1. A pinion (1) for an aircraft turbomachine gear train, the pinion (1) comprising:
- a cylindrical body (2) extending along an axis (A) and configured to engage with a shaft received in the cylindrical body,
- a rim (4) concentric with the cylindrical body (2),
- a web (3) axially delimited by a front wall (32) and a rear wall (33) and extending radially from the cylindrical body (2) to the rim (4), each of the front and rear walls having a density, the web comprising a cross-linked structure (5) around the cylindrical body (2) between the front wall (32) and the rear wall (33),
the pinion (1) being **characterized in that** the cross-linked structure comprises an elementary mesh (M) repeated along three axes of a three-dimensional reference frame forming a lattice structure, a mass density of the elementary mesh being strictly smaller than each of the densities of the front and rear walls.

2. The pinion (1) according to claim 1, wherein the cross-linked structure (5) extends radially to an interface (I) between the cross-linked structure and the rim (4).

3. The pinion (1) according to any one of claims 1 or 2, wherein the cross-linked structure (5) has a symmetry of revolution about the axis (A) of the cylindrical body.

4. The pinion (1) according to any one of claims 1 to 3, wherein the front wall (32) and/or the rear wall (33) extend radially from the cylindrical body (2) to the rim (4).

5. The pinion (1) according to any one of claims 1 to 4, wherein the rim (4) comprises an overhang (41) extending axially beyond the front wall (32) or beyond the rear wall (33), an average axial width (43) of the overhang (41) being preferably less than 80% of an average axial width (42) of the rim (4).

6. The pinion (1) according to any one of claims 1 to 5, wherein the radial distance between the cross-linked structure (5) and the cylindrical body (2), in any axial position along the axis (A), is greater than a non-zero minimum radial gap (8).

7. The pinion (1) according to any one of claims 1 to 6, wherein the front wall and the rear wall provide continuity of material with the cylindrical body (2) and with the rim (4), the front and rear walls joining the rim at the level of the interface (I).

8. The pinion (1) according to any one of claims 1 to 7, wherein the mesh (M) of the cross-linked structure (5) is of hexagonal diamond geometry.

9. The pinion (1) according to any one of claims 1 to 8, wherein a volume density of material of the mesh (M) of the cross-linked structure (5) is less than or equal to 5%.

10. A reduction gearbox for an aircraft turbomachine, the reduction gearbox comprising a reduction gear train (18) configured to couple in rotation a turbine shaft (15) of a turbomachine and an output shaft (17) of the turbomachine, the reduction gear train comprising a pinion (1) according to any one of claims 1 to 9.

11. An aircraft turbomachine, preferably a helicopter turbine engine (10), the turbomachine comprising at least one shaft and comprising a pinion (1) according to any one of claims 1 to 9, the shaft being coupled in rotation with the pinion (1).

12. An aircraft comprising a turbomachine according to claim 11.

13. A method for manufacturing a pinion (1) for an aircraft turbomachine gear train, the method comprising successive steps of:
- obtaining (E2) a cylindrical body of the pinion (1);
- obtaining (E3) a front wall of a web (3) of the pinion (1) and obtaining a rim providing continuity of material with the front wall, the front wall having a density;
- positioning (E4), against the front wall, a cross-linked structure (5) having been obtained by repetition of an elementary mesh (M) along three axes of a three-dimensional reference frame forming a lattice structure, a density of the elementary mesh being strictly smaller than the density of the front wall,
- obtaining (E5) a rear wall of the web of the pinion (1), against the cross-linked structure, a material of the rear wall being chosen with a density of the rear wall strictly greater than the density of the cross-linked structure,
the cylindrical body, the front and rear walls of the web (3) and the rim (4) being obtained in one piece by additive manufacturing, the web (3) thus obtained incorporating the cross-linked structure (5), the pinion (1) obtained being according to any one of claims 1 to 9.

14. The manufacturing method according to claim 13, wherein the front wall and/or the rear wall of the web (3) is obtained by selective laser melting on a powder bed.

15. The manufacturing method according to any one of claims 13 or 14, comprising a step (E1) of obtaining the cross-linked structure (5), said step comprising the repetition of the elementary mesh (M) along the three axes to obtain a deformable matrix and further comprising a deformation of the deformable matrix, preferably by stretching, to give the deformable matrix a predetermined shape.

16. The manufacturing method according to any one of claims 13 to 15, wherein:
- during the positioning step (E4), a contact between the front wall and the cross-linked structure (5) is made at a first inclination relative to a plane perpendicular to the axis (A) of the cylindrical body, the first inclination being preferably greater than 20 degrees,
- during the step of obtaining (E5) the rear wall, a contact between the rear wall and the cross-linked structure (5) is made at a second inclination relative to said plane, the second inclination being strictly smaller than the first inclination, the cross-linked structure (5) serving as a support for obtaining the rear wall.
